# EUROPEAN PATENT SPECIFICATION

(11) **EP 2 474 229 B1**
(45) Date of publication and mention of the grant of the patent: **28.03.2018**
(21) Application number: 12150362.7
(22) Date of filing: 06.01.2012
(51) Int. Cl.: A22C 29/02, A22C 29/04, A23B 4/01, A23B 4/06, A23L 3/01, A23L 3/02, B65B 55/02, A23L 3/3418, A23B 4/16, B65B 25/22, B65B 55/14, A23L 17/40, A23L 17/50, A23L 17/00

(54) **Method and apparatus for packaging food product**
Verfahren und Vorrichtung zum Verpacken eines Nahrungsmittels
Procédé et dispositif pour le conditionnement d'un produit alimentaire

(30) Priority: 07.01.2011 NL 2005969
(43) Date of publication of application: 11.07.2012
(73) Proprietor: Roem van Yerseke B.V., 4401 KZ Yerseke (NL)
(72) Inventor: Lacor, Hubertus Johannes, 4401 JD Yerseke (NL)
(74) Representative: V.O.

(56) References cited:
- EP-A1- 0 880 899
- WO-A1-2006/084402
- GB-A- 2 444 473

## Description

The invention relates to a method for packaging food products, especially cooked food products in a closed package, which is preferably at least partly flexible. The invention especially relates to such method wherein the food product is cooked inside the package.

It is known to package a food product, such as crustaceans, bivalves mollusc, fish, pasta and vegetables, in an at least party flexible package, wherein the food product is cooked inside the closed package. Due to heating of the food product pressure in the package will rise, deforming a flexible part of the package. In order to relieve pressure it is known to use a package with a one way valve or pressure relief openings through which gas can leave the package. When the package is subsequently cooled to a temperature for storage, such as for example to or below about 4 to 6 °C, the pressure inside the package will drop to well below atmospheric pressure. This will deform the package to fit snugly around and therefore pressurise the food product.

From WO2006/084402 it is known to include a gas injector for injecting gas into the package between the cooking of the food product and the storage at about 4 to 6 °C, to at least partly limit the pressure drop in the package. This reduces the deformation of the package to some extend.

GB2444473 discloses a method for packaging and cooking mussels, wherein the mussels are cleaned and sorted, where after they are vacuum packed in a flexible pouch. The mussels are then cooked in their vacuum packaging until the mussels are at least partly cooked. The vacuum packaged, at least partly cooked mussels are then inserted into a tank containing chilled water, and are at the same time sprayed with chilled water from jets, having a spraying direction contrary to the direction of transport of the packaged mussels through the tank. The aim thereof is to keep the packaged mussels as much as possible submerged in the tank and to maintain cooling from all sides, such that uniform cooling of the mussels is obtained. The temperature of the mussels is brought to a temperature below 25°C before leaving the tank. Then the mussels are blast frozen to a storing temperature below -15 °C. The vacuum in the package is maintained. Vacuum packaging has the disadvantage that the packaging material is forced against the shells of the mussels, rendering the outside of the package deformed and uneven, whereas this method can only be performed with flexible bags as packaging material. Moreover this method requires a vacuuming machine.

An object of the present invention is to provide an alternative method for packaging cooked food product. Another object of the present invention is to provide a method for packaging cooked food product, wherein the product is preserved in a proper way, wherein deformation of the package is limited, relative to at least the method of WO2006/084402 or GB2444473. There is also disclosed an apparatus for packaging food product, wherein the food product is cooked inside the package. Another object of the present invention is to provide a use of an at least partly flexible package for packaging food product, wherein the food product is cooked inside the package, wherein the package preferably preserves or regains its original pre cooking shape better than in the method of WO2006/084402.

At least one of these objects can be obtained with a method or use according to the appended claims. In an aspect a method according to the present disclosure can be characterised by the food product being packed in a package which is closed, where after the food product is cooked in the package. The package is then cooled from or at one side, such that a temperature gradient is obtained through the food product. If desired after a period of cooling gas can be inserted into the package.

The food product can preferably be packaged in a tray, wherein the tray is fed through a cooling bath with a lower part of the tray or over a cooled surface with a bottom of the tray. The food product can be heated in the package, especially a tray to at least about 90°C, wherein the food product is there after cooled such that an upper part of the food product is kept at a temperature of at least about 70°C, preferably between about 75°C and 90°C, wherein a lower part of the product is cooled to under about 75°C, preferably below at least 50°C, such as for example to a temperature of about 20°C or lower. These temperatures are to be measured at the prevailing pressure within the package

In another aspect the invention can be characterised by a use of a package for packaging crustaceans, bivalves and/or fish, comprising the steps of:
- placing the crustaceans, bivalves and/or fish on a bottom of the package through an opening,
- mounting a partly flexible closure in and/or over the opening,
- heating the tray with the crustaceans, bivalves and/or fish by micro wave energy,
- cooking the crustaceans or bivalves by bringing the crustaceans, bivalves and/or fish to a cooking temperature within the package, preferably by bringing the meat of the crustaceans, bivalves and/or fish to a temperature of at least about 90°C, more preferably at least about 95° and maintaining that temperature for a cooking period,
- feeding the package through a cooling step, such that a bottom portion of the package with crustaceans, bivalves and/or fish is cooled, thereby bringing the temperature of the crustaceans, bivalves and/or fish in a lower portion of the package below the cooking temperature, whereas the temperature of crustaceans, bivalves and/or fish in an upper portion in the package is kept above about 70°C, preferably above about 75°C, such that temperature of the upper food portion is above the temperature of the lower food portion.
Preferably gas is fed into the tray during and/or after the cooling step.

Embodiments of the present invention shall be described, with reference to the drawings, for elucidation of the invention. These embodiments should by no means be understood as limiting the scope of the invention in any way or form. In these drawings:
Fig. 1 shows schematically steps of a method according to the invention;
Fig. 2 shows schematically in cross section a tray comprising a food product, shown as bivalves, during heating, during cooling, during gas injection and after gas injection;
Fig. 2A shows a tray of fig. 2 at four different stages
Fig. 3 shows schematically an apparatus for use in packaging food products.

In this description and the drawings the same or similar elements have the same or similar reference signs. In this description the invention shall specifically be described with reference to sea food products to be packaged, which can for example be crustaceans, bivalves and/or fish, although the same may be applicable to other food products. Food products are packaged in a package, which package is at least partly flexible, and are cooked, preferably inside the package.

In this description by way of example packages are described comprising a plastic tray, closed by a film cover, which may for example be hot sealed, for example welded or glued, or be clamped to the tray. The tray and film are preferably microwave safe and heat resistant sufficiently for the product to be cooked therein. Alternative packages can be used, for example but not limited to film bags.

In this description cooking of the food products is described using microwave energy, such as a microwave oven, as a preferred method of cooking. In this description cooking has to be understood as including at least bringing an internal temperature of a food product, especially of the meat of a bivalve, such as a mussel, or crustacean to a cooling temperature, such as to a temperature above at least 75°C, preferably above at least 85°C, more preferably at least for a period of time to or above 95°C. For bivalves or crustaceans cooked in their shell, the shell temperature may be higher, especially if they are cooked in the package with some water or such fluid.

In this disclosure cooling at or from one side has to be understood as meaning at least that one side of a package is cooled directly by contact with a cooling surface or cooling medium, whereas an opposite side is not in direct contact with such cooling surface or medium. Therefore at the opposite side there are no active cooling means. In this disclosure cooling at or from one side has also to be understood as at least including cooling of a package by a cooling medium, especially a cooling liquid such as water, along a bottom and a lower part of a wall extending from said bottom, whereas an upper part of said wall and a top wall or cover of the package are not in contact with said medium, such that different cooling profiles are provided from opposite sides of the package. In this description a lower part and an upper part of the package have to be understood as opposite sides of the package, seen in a normal position, the lower part extending below the upper part, whereas the temperatures of the lower part and upper part of the package and/or the food product packaged therein are to be understood as measured directly near said respective opposite sides of the package.

In this description a temperature gradient over the packaged food is at least to be understood as encompassing a gradually increasing temperature from one side of the package, especially the lower part, towards an opposite second side of the package, especially upward to the upper part of the package, as discussed hereafter. Such temperature gradient can be established during the period of cooling in a cooling step in which the package is cooled from or at said one side only

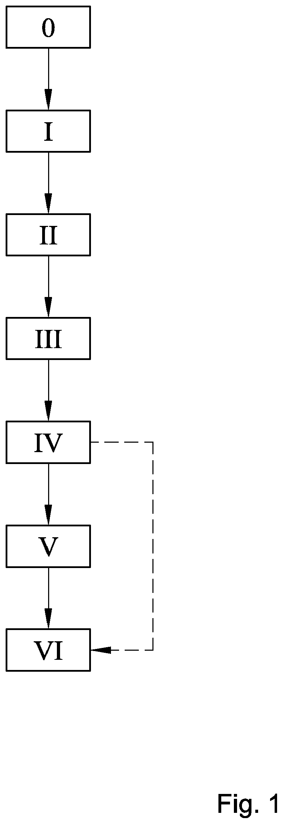

In fig. 1 schematically steps of a method for packing, heating and cooling of food products are shown. In fig. 1 steps of such of such process are described as part of a method for packaging bivalves, especially mussels in a tray. The mussels are harvested, cleaned and sorted in a known manner, which steps O do not necessarily form part of the claimed process. Then in a first step I the mussels are placed in package. The package can comprise a tray which has an open top side and a closed bottom and wall. If desired some fluid and/or other additives could be added to the package. Preferably only water contained by the mussels or attached to them is packaged with the mussels.

In a second step II the package is closed. In case of a tray this can be done by closing an open top side of the tray with a closure, such as but not limited to a film, sealed to the tray. This can be done for example by hot sealing as known in the art. The closure can be provided with at least one opening, for allowing gas such as air to escape from the package.

In a third step III the package with the mussels therein can be subjected to heating, for example by microwave energy, such that cooking of the mussels is obtained. The mussels can be heated in the package to such extend that the mussel meat is cooked. To this end the temperature of the mussel meat is preferably brought to above about 70°C, preferably above 80°C, more preferably above 95°C, for a sufficient period of time. The shells of the mussels can well be brought to a temperature of for example 120°C or more. If liquid is available in the package this may be brought to boil.

During heating of the food product in the package the temperature will rise within the package, as will pressure. Especially when some liquid is contained in the package, which may be added liquid or liquid contained by or hanging from the food product, especially from shells, this liquid will start to boil and form steam, which will cook the product, will sterilise the package on the inside and the food product, but also can lead to a pressure increase. Part of the steam can escape from the package through said at least one opening, thus preventing the pressure from rising to high. This prevents the package from bursting. Due to the elevated temperature inside the package the contents of the package may become at least substantially sterile. The overpressure in the package and the raised temperature may prevent contamination from the outside.

A valve, especially a one way valve could be provided in the opening. Alternatively the at least one valve can be provided as openings in the film or multi layer films, again allowing gas such as air to escape, but not to enter the package. Preferably such at least one valve will be at least watertight or can be closed water tight.

After sufficient heating and thus cooking of the food product, such as mussels, the package can in a further step VI be cooled back to or beyond room temperature, such as about 20°C or below. By reducing the temperature the pressure inside the package will drop, which may lead to under pressure, which is to be understood as at least meaning pressure below atmospheric pressure outside the package. This could lead to undesired deformation of the package or parts thereof, for example but not limited to a film covering being pulled tight over the mussels to an extend which might be undesirable. Moreover increased under pressure might lead to sucking into the package undesired gas and/or contamination. These problems could become worse by bringing the temperature of the package and the food product contained therein further down, to for example about 4 to 6°C or less, for longer time storage, transport and the like.

From for example WO2006/084402 it is known to inject gas, especially inert gas or a gas mixture into the package in a step V during and/or after said heating step II, reducing or even eliminating the under pressure in the package, or at least preventing the under pressure from occurring and/or persevering. This is however not always satisfying.

In the present invention an extra step IV is added, after the heating step, in which the package is partly cooled, such that the food product in a first part of the package is brought to a temperature which is lower than the temperature of the food product in another part of the package. A temperature difference, especially a temperature gradient is therewith obtained over the package. In the embodiment described here the food product in a lower part of the package, especially the tray, is cooled, preferably relatively quickly, to a temperature below the cooking temperature, whereas an upper portion of the food product remains at a elevated temperature, above the temperature of he lower food portion. Thus the temperature gradient or difference is obtained over the package in vertical direction. The food product with the higher temperature is closer to the closure and/or any possible opening therein or formed thereby, whereas the lower temperature food product is closer to the bottom of the tray.

By reducing the temperature of the food product in the one part of the package, for example near or at the bottom portion of the tray, quicker than in another part of the product, especially near or at the top of the package, the pressure in the package will drop fast, whereas the chances of contamination of the food product is further reduced. Moreover, by reducing the temperature of the food product near the bottom of the package, especially the tray, relatively quickly, the cooking process of the mussels will be stopped, preserving the quality of the mussels. Especially the shells can be cooled down relatively easily and quickly. When stopping the cooking process relatively quickly and well controlled, the quality of the cooked product can be improved.

Preferably this cooling step IV is followed by the gas injection step V as discussed here above, further preserving the quality of the food product and/or the package, by removing remaining gas, especially air, more specifically oxygen, from the package. The gas injected into the package will drive the remaining gas from the package through the at least one aeration opening.

After the heating step and, if applicable, the gas injection step, the at least one opening and, if applicable, an additional opening made by an injection means such as a needle for injecting gas, will be closed to the environment. This can be done by for example adhering a sticker over the opening or openings. Since the temperature of the food product and surrounding air at the top of the package, i.e. near the opening will still be around 70°C or higher, preferably about 75 to 80°C or higher, but preferably below cooking temperature, when closing the at least one opening the sterility of the food product and an inside the package will be maintained and preserved.

The package can then be stored, for example in the further cooling and storing step VI, wherein the temperature can be brought further down to for example about 4 to 6°C or less.

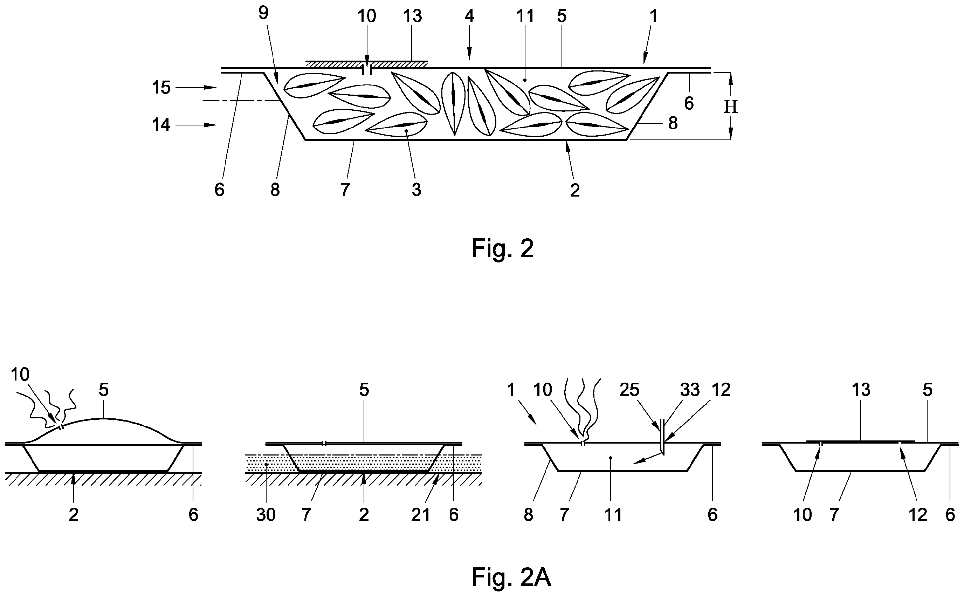

Fig. 2 shows schematically in cross section a package 1 of the present invention, here shown as a tray 2, filled with mussels 3 and closed off at a top side 4 by a film cover 5. The cover 5 is sealed on a flange 6 of the tray 2, in a known manner, making the sealing at least gas and/or fluid tight. The tray 2 has a bottom 7 and a wall 8 extending from said bottom 7 and provided with said flange 6. An opening 9 is defined which, prior to sealing the cover 5, can be used for filling the food product such as mussels into the container 2. An opening 10 is provided in the film cover 5, for allowing gas such as air and/or steam to escape form the internal space 11 of the package. The opening 10 can for example be about circular with a diameter of between 0,5 and 5 mm across, for example about 1 to 3 mm, more specifically about 2 mm across. The opening can have any shape or form, and can have a surface area comparable to that of a circle having a diameter of any of the above mentioned dimensions. In embodiments the film or cover 5 can be made according to for example a film from Micropast, Switzerland GmbH.

In the embodiment shown the tray 2 can be made of plastic, such as but not limited to PE, PS or PET, or any other suitable material able to withstand the temperatures to which the tray may be exposed during the heating step as well as during any cooling step. The tray may also be made of another material, such as but not limited to metal, such as steel, or glass. The cover 5 may be made of plastic as well, and can be made of the same or a similar material as the tray 2, and preferably is heat sealable to the tray. The cover can be sealed to the tray. In another embodiment the cover 5 can be provided in a different way, for example but not limited to press fitting, hooking, gluing, clicking or the like, the connection preferably being gas and water tight.

In fig. 2A from left to right four times a tray 2 is shown, during heating, during cooling, during gas injection and after gas injection respectively. During heating the cover 5 will expand and form a somewhat dome shape. Excess steam and air can be expelled through the opening 10. During cooling a lower part of the tray is cooled, for example by immersion of the lower part 14 of the tray 2 into cooled water 30 for a period of time, or by bringing the lower part 14 of the tray 2, especially a bottom 7 thereof, into contact with a cooled surface 21 for a period of time. The food product 3 inside the tray will then start cooling from the lower part 14, especially from the bottom 7 up, leading to a temperature gradient over the food product 3. The pressure inside the tray 2 will be reduced. After the desired period of cooling, gas may be introduced into the package by gas injection means 25. This gas could be introduced through the opening 10, leaving part of the opening 10 free for gas to escape from the package. However, preferably gas is injected into the package by sticking a needle 33 of a gas injector 25 into the package 1 through the cover 5, forming an additional hole or opening 12. Gas, such as but not limited to an inert gas, non reactive with the food product, such as but not limited to an oxygen free gas or gas mixture, for example containing N₂, is inserted into the package, driving remaining gas from the package out through the opening 10. Then the gas injection means 25 is retreated, if applicable leaving the hole or additional opening 12 open, as well as the opening 10. As can be seen in fig. 2 and 2A then a closure 13 is provided over the opening 10 and, if applicable, over the additional opening 12, closing this opening 10 or these openings 10, 12 gas tight. The closure 13 can be one closure, such as for example but not limited to a sticker, adhered to the cover covering both openings 10, 12, or there can be separate covers 13 such as a sticker for each opening 10, 12. This or each closure 13 can prevent the inside of the package and, especially, the food product from being contaminated. To this end the or each closure 13 is preferably provided in a gas tight manner over the or each opening 10, 12 before the temperature of the food product near the or each opening 10, 12 in the cover is lowered to about 70 - 75°C, preferably before said temperature is lowered to about 80°C. Thus the food product and the inside of the package will be maintained sufficiently sterile.

After closing the opening 10 or openings 10, 12 by the closure 13 the package can be cooled further, for example in a known cooler or freezer, for storage and/or distribution.

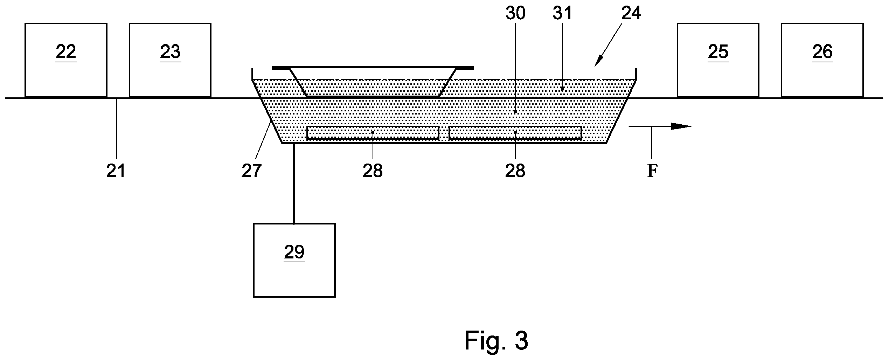

Fig. 3 shows schematically an apparatus 20 for treating, especially packaging, heating and cooling food products, especially crustaceans, bivalves and/or fish. The apparatus 20 can be a plant or part thereof, comprising along a transport device 21 a packaging device 22, a heating device 23 and a cooling device 24. Furthermore a gas injecting device 25 can be provided, as well as a further cooling device 26. The packaging device 22 is designed for packaging food products in closed packages, comprising at least one aeration opening 10. The heating device 23 can be a known type of microwave heater. The gas injecting device 25 can be a known device, such as for example known from WO2006/084402. The further cooling device 26 can be a cooling chest, freezer or the like.

In the embodiment of fig. 3 the cooling device 24 comprises a tank 27 comprising water 30 and possibly other components, such as anti freeze, and cooling elements 28 for cooling the water or mixture to a temperature well below 70°C, preferably below 20°C, more specifically 10°C or lower. The transport device 21 can extend through the water tank 27, a shallow body 31 of water 30 extending above the transport device 21. The body of water can have a depth above the transport device 21 of for example 1 - 5 centimetres. The depth can be such that only a lower part 14 of packages will extend in the body of water, an upper portion 15 extending above the body 31 of water 30. The depth can for example be about half the height H of the package 1, and can be chosen depending on the packages 1 to be cooled. The transport device 21 will further the packages 1 through the body of water, from the heating device 23 to the gas injecting device 25 and/or the further cooling device 26 in direction F at a speed such that the desired temperature gradient and temperature profile over the food product 3 is obtained. The speed and/or the water temperature and/or the depth of the body of water above the transporting device 21 can preferably be set and controlled manually and/or by a control device 29.

An example shall be discussed hereafter, which should only be understood as elucidating the invention and not in any way limiting the scope of protection or the disclosure.

In a plastic tray, having a length and width of about 230 by 180 mm and a height of about 67 mm about 750 grams of mussels and about 100 grams of a mixture of water, vegetables, herbs and spices were packed. The tray was then sealed using laminated plastic film, comprising a hole 10 having a circular shape with a diameter of about 2 mm. The tray with the mussels 3 was then heated by microwave energy, such that the temperature of the mussel meat was on average about 90 to 95°C, whereas the shells were warmer. Subsequently the tray 2 was submerged with a lower portion 14 into a cooling bath comprising water 31 having a temperature of about 5°C, for about 1.5 min. The tray 2 was submerged into the water 31 to about halve its height H, i.e. about 33 mm. The upper side 15, comprising the film 5 and the hole 10 extended therefore above the water 31. The tray 2 was moved through the water 31 during the said 1.5 minutes. Upon leaving the water 31 the temperature of the mussels 3 near the film 5 was about 65 to 70°C, whereas the temperature of the mussels 3 near the bottom 7 of the tray 2, opposite the film 5, was about 20°C. A temperature gradient was thus obtained over the height H of the tray 2 and thus over the mussels 3. After leaving the water 31 gas was injected into the tray 2 through a needle 33 injected through the film 5, spaced apart from the hole 10, flushing the package 1 and driving about all remaining oxygen containing air from the package 1, out through the hole 10. The pressure within the tray 2 was raised to about atmospheric level or just below, where after the hole 10 and the hole 12, left when retracting the needle 33 from the film 5, were closed by a sticker 13. Thus the package 1 was formed, closed from the environment, the mussels 3 having been cooked properly and packaged food grade sterile. Obviously, temperatures and timing can be varied, depending for example on the food products to be treated, lay out of the devices used and other such factors, which can easily be understood by the person skilled in the art.

In more general description a package 1 of crustaceans, bivalves and/or fish can be obtained, having a bottom 7 and a top 4, wherein a temperature gradient exists through the food product 3 from the bottom 7 to the top 4, such that a temperature difference exists between the food product 3 near the bottom 7 and the food product 3 near the top 7, wherein preferably the temperature of product 3 at the top 4 is at least 70°C, more preferably at least 80°C, wherein the temperature of product 3 at the bottom 7 is preferably at least 30°C lower, more preferably more than 40°C and even more preferably at least 50°C.

The invention is by no means limited to the embodiments shown and described here before. Many variations are possible within the scope of the present invention.

For example, in stead of using water for cooling the lower part of the package, other cooling means can be used, such as other liquids or liquid mixtures, for example but not exclusively based on glycol, or other cooling devices, such as for example a cooled surface over which the packages are fed, such as but not limited to a cooled transport surface. Packages can be transported and treated individually or batch-wise. They can be cooled while moving or when staying in a chosen position, whereas the water or other liquid, if used, can be fed along the packages. The step of injecting gas can be left out or can be performed in a different way. Other food products can be treated and packaged in the same or a similar way. In stead of a tray other packaging devices can be used, for example bags or buckets. The food product can be heated differently, for example by convection, induction or air heating. The hole or opening for expelling gas from the package can also be provided in a different position, and/or by for example a gas permeable membrane.

These and similar amendments, including all combinations of embodiments discussed and/or parts thereof, are considered to have been disclosed herein and covered by the invention as claimed in the appending claims.

## Claims

1. Method for packaging cooked food product, especially crustaceans, bivalves and/or fish, wherein the food product is packed in a package (1) which is closed, where after the food product (3) is cooked in the package (1), wherein the package (1) is then
- cooled directly by contact of a side (7) of the package (1) with a cooling surface (21) or cooling medium (30), whereas an opposite side (4, 15) is not in direct contact with such cooling surface (21) or medium (30) such that at the opposite side (4, 15) there are no active cooling means; or
- cooled by a cooling medium (30), especially a cooling liquid such as water, along a bottom (7) and a lower part of a wall extending from said bottom (7) of said package, whereas an upper part of said wall and a top wall (5) or cover of the package are not in contact with said medium (30), such that different cooling profiles are provided from opposite sides (14, 15) of the package (1);
such that a temperature gradient is obtained through the food product (3) from said at least one side to said opposite side, where after gas is inserted into the package (1).

2. Method according to claim 1, wherein the food product (3) is packaged in a tray (2), wherein the tray (2) is fed through a cooling bath (27) with a lower part (14) of the tray (2) or over a cooled surface (21) with a bottom (7) of the tray (2).

3. Method according to claim 2, wherein the package (1) is closed at least by film (5) or by a lid (5) with at least one opening (10), preferably opposite the lower part (14) or bottom (7) of the tray (2).

4. Method according to any one of the previous claims, wherein the food product (3) is heated in the package (1), especially a tray (2) to at least about 100°C, wherein the food product (3) is there after cooled such that an upper part (15) of the food product (3) is kept at a temperature of at least about 75°C, preferably between about 75°C and 90°C, wherein a lower part (14) of the product (3) is cooled to under about 75°C, preferably below at least 50°C, such that the temperature of the lower part (14) of the product (3) is lower than the temperature of the upper part (15) of the product (3).

5. Method according to any one of the previous claims, wherein the food product (3) is cooled such that cooking of the food product (3) is stopped, at least in a lower part (14) of the package (1).

6. Method according to any one of the previous claims, wherein a plastic tray (2) is used for packaging, wherein the tray (2) is closed by an at least partly flexible closure (5), especially a film, such that after cooking the closure can at least partly be pulled onto the top of the food product (3).

7. Method according to claim 6, wherein the closure (5) comprises or is provided with at least one venting opening (12), which is closed after cooling the at least one side of the package (1).

8. Use of a package (1) for packaging crustaceans, bivalves and/or fish, comprising the steps of:
- placing the crustaceans, bivalves and/or fish on a bottom (7) of the package through an opening,
- mounting a partly flexible closure (5) in and/or over the opening,
- heating the tray with the crustaceans, bivalves and/or fish by micro wave energy,
- cooking the crustaceans or bivalves by bringing the crustaceans, bivalves and/or fish to a cooking temperature within the package, preferably by bringing the meat of the crustaceans, bivalves and/or fish to a temperature of at least about 90°C, more preferably at least about 95° and maintaining that temperature for a cooking period,
- feeding the package (1) through a cooling step, such that a bottom portion (14) of the package with crustaceans, bivalves and/or fish is,
- cooled directly by contact with a cooling surface (21) or cooling medium (30), whereas an opposite side of the package is not in direct contact with such cooling surface (21) or medium (30) such that at the opposite side there are no active cooling means; or
- cooled by a cooling medium (30), especially a cooling liquid such as water, along a bottom (7) and a lower part of a wall (8) extending from said bottom (7), whereas an upper part of said wall (8) and a top wall or cover (5) of the package (1) are not in contact with said medium (30), such that different cooling profiles are provided from opposite sides (14, 15) of the package (1); thereby bringing the temperature of the crustaceans, bivalves and/or fish in a lower portion (14) of the package below the cooking temperature, whereas the temperature of crustaceans, bivalves and/or fish in an upper portion (15) in the package (1) is kept above about 70°C, preferably above about 75°C, such that the temperature of the upper food portion (15) is above the temperature of the lower food portion (14), and
- preferably feeding gas into the tray.

## Patentansprüche

1. Verfahren zum Verpacken gekochter Nahrungsmittel, besonders Krustentieren, Mollusken und/oder Fisch, wobei das Nahrungsmittel in eine Verpackung (1) verpackt ist, die geschlossen ist, wonach das Nahrungsmittel (3) in der Verpackung gekocht wird, wobei die Verpackung (1) dann
- direkt durch Kontakt einer Seite (7) der Verpackung (1) mit einer Kühloberfläche (21) oder einem Kühlmedium (30) gekühlt wird, während eine entgegengesetzte Seite (4, 15) nicht in direktem Kontakt mit einer solchen Kühloberfläche (21) oder einem solchen Kühlmedium (30) ist, sodass an der entgegengesetzten Seite (4, 15) keine aktiven Kühlmittel sind; oder
- durch ein Kühlmedium (30), besonders einer Kühlflüssigkeit wie etwa Wasser, entlang eines Bodens (7) und eines unteren Teils einer Wand, verlaufend von dem Boden (7) der Verpackung, gekühlt wird, während ein oberer Teil der Wand und eine obere Wand (5) oder Abdeckung der Verpackung nicht in Kontakt mit dem Medium (30) sind, sodass verschiedene Kühlprofile von entgegengesetzten Seiten (14, 15) der Verpackung (1) bereitgestellt sind;
sodass ein Temperaturgefälle durch das Nahrungsmittel (3) von der mindestens einen Seite zu der entgegengesetzten Seite erhalten wird, woraufhin Gas in die Verpackung (1) eingeführt wird.

2. Verfahren nach Anspruch 1, wobei das Nahrungsmittel (3) in eine Schale (2) verpackt wird, wobei die Schale (2) durch ein Kühlbad (27) mit einem unteren Teil (14) der Schale (2) oder über eine gekühlte Oberfläche (21) mit einem Boden (7) der Schale (2) geführt wird.

3. Verfahren nach Anspruch 2, wobei die Verpackung (1) mindestens durch eine Folie (5) oder durch einen Deckel (5) mit mindestens einer Öffnung (10), bevorzugt gegenüber dem unteren Teil (14) oder Boden (7) der Schale (2) verschlossen wird.

4. Verfahren nach einem der vorhergehenden Ansprüche, wobei das Nahrungsmittel (3) in der Verpackung (1), besonders einer Schale (2) auf mindestens ungefähr 100 °C erhitzt wird, wobei das Nahrungsmittel (3) daraufhin so gekühlt wird, dass ein oberer Teil (15) des Nahrungsmittels (3) auf einer Temperatur von mindestens ungefähr 75 °C, bevorzugt zwischen 75 °C und 90 °C, gehalten wird, wobei ein unterer Teil (14) des Nahrungsmittels (3) auf unter ungefähr 75 °C, bevorzugt unter mindestens 50 °C gekühlt wird, sodass die Temperatur des unteren Teils (14) des Nahrungsmittels (3) niedriger ist als die Temperatur des oberen Teils (15) des Nahrungsmittels (3).

5. Verfahren nach einem der vorhergehenden Ansprüche, wobei das Nahrungsmittel (3) so gekühlt wird, dass das Kochen des Nahrungsmittels (3) mindestens in einem unteren Teil (14) der Verpackung (1) gestoppt wird.

6. Verfahren nach einem der vorhergehenden Ansprüche, wobei eine Plastikschale (2) zum Verpacken verwendet wird, wobei die Schale (2) durch einen mindestens teilweise flexiblen Verschluss (5), besonders eine Folie, so verschlossen wird, dass nach dem Kochen der Verschluss mindestens teilweise auf die Oberseite des Nahrungsmittels (3) gezogen werden kann.

7. Verfahren nach Anspruch 6, wobei der Verschluss (5) mindestens eine Lüftungsöffnung (12) umfasst oder damit versehen ist, die nach dem Kühlen der mindestens einen Seite der Verpackung (1) geschlossen wird.

8. Verwendung einer Verpackung (1) zum Verpacken von Krustentieren, Mollusken und/oder Fisch, umfassend folgende Schritte:
- Platzieren der Krustentiere, Mollusken und/oder des Fischs auf einem Boden (7) der Verpackung durch eine Öffnung,
- Anbringen eines teilweise flexiblen Verschlusses (5) in und/oder über der Öffnung,
- Erhitzen der Schale mit den Krustentieren, Mollusken und/oder dem Fisch durch Mikrowellenenergie,
- Kochen der Krustentiere oder Mollusken, indem die Krustentiere, Mollusken und/oder der Fisch auf eine Kochtemperatur in der Verpackung gebracht werden, bevorzugt indem das Fleisch der Krustentiere, Mollusken und/oder des Fisches auf eine Temperatur von mindestens ungefähr 90 °C, bevorzugter mindestens ungefähr 95 ° gebracht wird, und Aufrechterhalten dieser Temperatur über einen Kochzeitraum,
- Führen der Verpackung (1) durch einen Kühlschritt, sodass ein Bodenabschnitt (14) der Verpackung mit Krustentieren, Mollusken und/oder Fisch,
- direkt durch Kontakt mit einer Kühloberfläche (21) oder einem Kühlmedium (30) gekühlt wird, während eine entgegengesetzte Seite der Verpackung nicht in direktem Kontakt mit einer solchen Kühloberfläche (21) oder einem solchen Kühlmedium (30) ist, sodass an der entgegengesetzten Seite keine aktiven Kühlmittel sind; oder
- durch ein Kühlmedium (30), besonders einer Kühlflüssigkeit wie etwa Wasser, entlang eines Bodens (7) und eines unteren Teils einer Wand (8), verlaufend von dem Boden (7) der Verpackung, gekühlt wird, während ein oberer Teil der Wand (8) und eine obere Wand (5) oder Abdeckung der Verpackung (1) nicht in Kontakt mit dem Medium (30) sind, sodass verschiedene Kühlprofile von entgegengesetzten Seiten (14, 15) der Verpackung (1) bereitgestellt sind;
um dadurch die Temperatur der Krustentiere, Mollusken und/oder des Fisches in einem unteren Abschnitt (14) der Verpackung unter die Kochtemperatur zu bringen, während die Temperatur der Krustentiere, Mollusken und/oder des Fisches in einem oberen Abschnitt (15) in der Verpackung (1) über ungefähr 70 °C, bevorzugt über 75 °C gehalten wird, sodass die Temperatur des oberen Nahrungsmittelabschnitts (15) über der Temperatur des unteren Nahrungsmittelabschnitts (14) ist, und
- bevorzugt Zuführen von Gas in die Schale.

## Revendications

1. Procédé de conditionnement d'un produit alimentaire cuit, en particulier des crustacés, des coquillages et/ou du poisson, dans lequel le produit alimentaire (3) est emballé dans un emballage (1) qui est fermé, après quoi le produit alimentaire (3) est cuit dans l'emballage (1), dans lequel l'emballage (1) est ensuite
- refroidi directement par contact d'un côté (7) de l'emballage (1) avec une surface de refroidissement (21) ou un milieu de refroidissement (30), alors qu'un côté opposé (4, 15) n'est pas en contact direct avec ladite surface (21) ou ledit milieu (30) de refroidissement de sorte que sur le côté opposé (4, 15), il n'existe aucun moyen actif de refroidissement ; ou
- refroidi par un milieu de refroidissement (30), en particulier un liquide de refroidissement tel que de l'eau, le long d'un fond (7) et d'une partie inférieure d'une paroi s'étendant à partir dudit fond (7) dudit emballage, alors qu'une partie supérieure de ladite paroi et une paroi supérieure (5) ou une protection de l'emballage ne sont pas en contact avec ledit milieu (30), de sorte que des profils de refroidissement différents sont fournis par des côtés opposés (14, 15) de l'emballage (1) ;
de sorte qu'un gradient de température est obtenu à travers le produit alimentaire (3) dudit au moins un côté audit côté opposé, après quoi un gaz est introduit dans l'emballage (1).

2. Procédé selon la revendication 1, dans lequel le produit alimentaire (3) est conditionné dans une barquette (2), dans lequel la barquette (2) est passée dans un bain de refroidissement (27) avec une partie inférieure (14) de la barquette (2) ou sur une surface refroidie (21) avec un fond (7) de la barquette (2).

3. Procédé selon la revendication 2, dans lequel l'emballage (1) est fermé au moins par un film (5) ou par un couvercle (5) comportant au moins une ouverture (10), de préférence à l'opposé de la partie inférieure (14) ou du fond (7) de la barquette (2).

4. Procédé selon l'une quelconque des revendications précédentes, dans lequel le produit alimentaire (3) est chauffé dans l'emballage (1), en particulier une barquette (2), jusqu'à au moins environ 100°C, dans lequel le produit alimentaire (3) est ensuite refroidi de sorte qu'une partie supérieure (15) du produit alimentaire (3) est maintenue à une température d'au moins environ 75°C, de préférence entre environ 75°C et 90°C, dans lequel une partie inférieure (14) du produit (3) est refroidie jusqu'à moins d'environ 75°C, de préférence en dessous d'au moins 50°C, de sorte que la température de la partie inférieure (14) du produit (3) est inférieure à la température de la partie supérieure (15) du produit (3).

5. Procédé selon l'une quelconque des revendications précédentes, dans lequel le produit alimentaire (3) est refroidi de sorte que la cuisson du produit alimentaire (3) est arrêtée, au moins dans une partie inférieure (14) de l'emballage (1).

6. Procédé selon l'une quelconque des revendications précédentes, dans lequel une barquette plastique (2) est utilisée pour le conditionnement, dans lequel la barquette (2) est fermée par une fermeture au moins en partie flexible (5), en particulier un film, de sorte qu'après la cuisson la fermeture peut être rabattue au moins en partie sur le sommet du produit alimentaire (3).

7. Procédé selon la revendication 6, dans lequel la fermeture (5) comprend ou est pourvue d'au moins une ouverture d'aération (12), qui est refermée après refroidissement de l'au moins un côté de l'emballage (1).

8. Utilisation d'un emballage (1) pour le conditionnement de crustacés, de coquillages et/ou de poisson, comprenant les étapes consistant à :
- placer les crustacés, les coquillages et/ou le poisson sur un fond (7) de l'emballage en les passant par une ouverture,
- fixer une fermeture en partie flexible (5) dans et/ou sur l'ouverture,
- chauffer la barquette avec les crustacés, les coquillages et/ou le poisson par une énergie de micro-ondes,
- cuire les crustacés ou les coquillages en amenant les crustacés, les coquillages et/ou le poisson à une température de cuisson à l'intérieur de l'emballage, de préférence en amenant la chair des crustacés, des coquillages et/ou du poisson à une température d'au moins environ 90°C, de préférence encore d'au moins environ 95° et en maintenant cette température pendant une durée de cuisson,
- faire passer l'emballage (1) par une étape de refroidissement, de sorte qu'une partie inférieure (14) de l'emballage avec des crustacés, des coquillages et/ou du poisson est
- refroidie directement par contact avec une surface de refroidissement (21) ou un milieu de refroidissement (30), alors qu'un côté opposé de l'emballage n'est pas en contact direct avec ladite surface (21) ou ledit milieu (30) de refroidissement de sorte que sur le côté opposé, il n'existe aucun moyen actif de refroidissement ; ou
- refroidie par un milieu de refroidissement (30), en particulier un liquide de refroidissement tel que de l'eau, le long d'un fond (7) et d'une partie inférieure d'une paroi (8) s'étendant à partir dudit fond (7), alors qu'une partie supérieure de ladite paroi (8) et une paroi supérieure ou une protection (5) de l'emballage (1) ne sont pas en contact avec ledit milieu (30), de sorte que des profils de refroidissement différents sont fournis par des côtés opposés (14, 15) de l'emballage (1) ;
- amener ainsi la température des crustacés, des coquillages et/ou du poisson dans une partie inférieure (14) de l'emballage en dessous de la température de cuisson, alors que la température des crustacés, des coquillages et/ou du poisson dans une partie supérieure (15) de l'emballage (1) est maintenue au-dessus d'environ 70°C, de préférence au-dessus d'environ 75°C, de sorte que la température de la partie supérieure (15) de l'aliment est supérieure à la température de la partie inférieure (14) de l'aliment, et
- introduire de préférence un gaz dans la barquette.
